# EUROPEAN PATENT APPLICATION

(11) **EP 2 469 896 A1**
(43) Date of publication of application: **27.06.2012**
(21) Application number: 10809777.5
(22) Date of filing: 17.06.2010
(51) Int. Cl.: H04W 8/00, H04M 3/00, H04W 16/32, H04W 84/10

(54) **BASE STATION APPARATUS, COMMUNICATION SYSTEM, COMMUNICATION METHOD, AND PROGRAM**

(30) Priority: 20.08.2009 JP 2009190808
(71) Applicant: Sumitomo Electric Industries, Ltd., Chuo-ku Osaka-shi Osaka 541-0041 (JP); Sumitomo Electric Networks, Inc., Tokyo 141-0022 (JP)
(72) Inventor: MURAKAMI, Kenichi, Osaka-shi Osaka 554-0024 (JP)
(74) Representative: Cross, Rupert Edward Blount
(86) International application number: PCT/JP2010/060297
(87) International publication number: WO 2011/021431

(57) **Abstract**

A femtocell base station is a base station apparatus connected to a fixed communication network through a terminating device for a wire communication line and communicable with a mobile phone by radio communication. The femtocell base station includes: an acquiring unit that acquires location information from the fixed communication network, the location information being registered in a management server of the fixed communication network in connection with the terminating device; and a notifying unit that notifies a mobile communication network of the location information as location information related to the femtocell base station.

## Description

### TECHNICAL FIELD

The present invention relates to a base station apparatus, a communication system, a communication method, and a program.

### BACKGROUND ART

Communications by mobile phones use radio waves. Thus, even within a communication coverage area, in a radio shadow area where radio waves from an outdoor base station (hereinafter, referred to as the "macrocell base station") are difficult to reach (or do not reach), communications by mobile phones cannot be performed. Hence, in order to enable communications by mobile phones even in such a radio shadow area, the construction of a communication system using a compact base station is considered.

In this communication system, a compact base station (hereinafter, referred to as the "femtocell base station") having, as its coverage area, a very small cell (a femtocell) with a radius of the order of several meters to several tens of meters is installed in a radio shadow area. The femtocell base station is connected to a fixed communication network through a terminating device for a wire communication line, and the fixed communication network is connected to a mobile communication network of a mobile network operator through a gateway. Therefore, mobile phones in the radio shadow area are connected to the mobile communication network through the femtocell base station and the fixed communication network. As a result, even in the radio shadow area, communications by mobile phones are enabled.

Note that the following Patent Literature 1 discloses a communication system including a wireless base station that is installed in an optical communication subscriber's home. In the communication system, a signal from a mobile phone used in the subscriber's home is transmitted to a local office from the wireless base station in the home through an optical communication cable and is then transmitted from the local office to various networks such as an IP network, a general telephone switching network, or a mobile communication switching network.

### CITATION LIST

### [PATENT LITERATURE]

Patent Literature 1: Japanese Unexamined Patent Publication No. 2004-15103

### SUMMARY OF INVENTION

### TECHNICAL PROBLEM

A femtocell base station is freely installed by a user who has, for example, purchased it, in a building (e.g., in the user's home). Hence, to perform planning and installation of a base station by a mobile network operator, the mobile network operator needs to collect location information on the installed femtocell base station from the femtocell base station.

Here, for the collection of the location information, it may be considered to mount a receiver for GPS (Global Positioning System) signals on the femtocell base station. However, the addition of the GPS signal receiver increases the cost for the femtocell base station. In addition, the femtocell base station is not always installed near the window, in which case a GPS signal cannot be directly received and thus the accuracy of location identification decreases.

The present invention is made in view of such circumstances, and an object of the present invention is therefore to obtain a base station apparatus, a communication system, a communication method, and a program that are capable of achieving acquisition of location information on the installed base station apparatus with ease and low cost.

### SOLUTION TO PROBLEM

A base station apparatus according to a first aspect of the present invention is connected to a fixed communication network through a terminating device for a wire communication line, and communicable with a mobile terminal by radio communication, and the base station apparatus includes: acquiring means for acquiring first location information from the fixed communication network, the first location information being registered in a management server of the fixed communication network in connection with the terminating device; and notifying means for notifying a management server of a mobile communication network, of the first location information as location information related to the base station apparatus.

Here, the terminating device includes any equipment installed indoors to terminate an outdoor wire communication line, such as an ONU, an ADSL modem, a VDSL modem, or a dial-up modem.
The management server of the fixed communication network is an apparatus having the function of providing, as a service, the function of storing and managing first location information which is registered in connection with the terminating device, in the fixed communication network. The management server of the fixed communication network includes various apparatuses arranged in the fixed communication network and having the above-described function.
The management server of the mobile communication network is an apparatus having the function of providing, as a service, the function of receiving and managing first location information serving as location information related to the base station apparatus, which is notified from the base station apparatus, in the mobile communication network. The management server of the mobile communication network is implemented by an apparatus arranged in the mobile communication network, e.g., an HLR (Home Location Register), a VLR (Visitor Location Register), an RNC (Radio Network Controller), an MSC (Mobile Switching Center), an SGSN (Service GPRS (General Packet Radio Service) Support Node), an MME (Mobility Management Entity), an S-GW (Serving SAE Gateway), a P-GW (PDN SAE Gateway), and an HSS (Home Subscriber Server). Alternatively, the base station apparatus may have the function of the management server of the mobile communication network.

The way of notification of the first location information to the management server of the mobile communication network by the notifying means includes not only the way in which it is notified to the management server of the mobile communication network from the base station apparatus by the notifying means, but also the way in which the notifying means allows the management server of the fixed communication network to provide notification of location information destined for the management server of the mobile communication network.

The location information includes location information on the installed terminating device, such as address information or whereabouts information.

According to the base station apparatus of the first aspect, the acquiring means acquires, from the fixed communication network, the first location information which is registered in the management server of the fixed communication network in connection with the terminating device. Then, the notifying means notifies the management server of the mobile communication network, of the first location information as the location information related to the base station apparatus. Therefore, comparing with the case of mounting a GPS signal receiver on the base station apparatus, the acquisition of the location information on the installed base station apparatus can be achieved with ease and low cost.

According to a second aspect of the present invention, particularly in the base station apparatus of the first aspect, it is determined whether or not to allow the acquiring means to acquire the first location information, based on a comparison result between the first location information and the second location information related to the base station apparatus, the second location information being registered in advance in the management server of the mobile communication network.

According to the base station apparatus of the second aspect, in the management server of the mobile communication network, the second location information related to the base station apparatus is registered in advance. Then, based on the comparison result between the first location information and the second location information, it is determined whether or not to allow the acquiring means to acquire the first location information. Therefore, by not allowing the acquiring means to acquire the first location information when, for example, address information or the like requested upon making a contract (the second location information) differs from the actual installed location (the first location information), the first location information can be prevented from being acquired by an unauthorized base station apparatus.

According to a third aspect of the present invention, particularly in the base station apparatus of the first aspect, it is determined whether or not to allow use of the base station apparatus, based on a comparison result between the first location information and the second location information related to the base station apparatus, the second location information being registered in advance in the management server of the mobile communication network.

According to the base station apparatus of the third aspect, in the management server of the mobile communication network, the second location information related to the base station apparatus is registered in advance. Then, based on the comparison result between the first location information and the second location information, it is determined whether or not to allow use of the base station apparatus. Therefore, by not allowing the use of the base station apparatus when, for example, address information or the like requested upon making a contract (the second location information) differs from the actual installed location (the first location information), unauthorized use of the base station apparatus can be prevented.

According to a fourth aspect of the present invention, particularly in the base station apparatus of the first aspect, a mobile terminal communicable with the base station apparatus is determined based on a comparison result between the first location information and the second location information related to the base station apparatus, the second location information being registered in advance in the management server of the mobile communication network.

According to the base station apparatus of the fourth aspect, in the management server of the mobile communication network, the second location information related to the base station apparatus is registered in advance. Then, based on the comparison result between the first location information and the second location information, a mobile terminal communicable with the base station apparatus is determined. In this manner, user convenience can be improved. For example, by submitting home address information (the second location information) upon making a contract and registering information on family members' mobile phones in the base station apparatus, mobile phones communicable with the base station apparatus installed in the home can be limited only to the family members' mobile phones.

According to a fifth aspect of the present invention, particularly in the base station apparatus of the first aspect, content of a process performed by the base station apparatus is determined based on a comparison result between the first location information and the plurality of pieces of second location information related to the base station apparatus, the pieces of second location information being registered in advance in the management server of the mobile communication network.

Here, the process performed by the base station apparatus includes a process of determining whether or not to allow use of the base station apparatus or a process of determining a mobile terminal communicable with the base station apparatus.

According to the base station apparatus of the fifth aspect, in the management server of the mobile communication network, the plurality of pieces of second location information related to the base station apparatus are registered in advance. Based on the comparison result between the first location information and the plurality of pieces of second location information, the content of a process performed by the base station apparatus is determined. Therefore, by not allowing use of the base station apparatus when, for example, address information or the like requested upon making a contract (the plurality of pieces of second location information) differs from the actual installed location (the first location information), unauthorized use of the base station apparatus can be prevented. In addition, by registering the plurality of pieces of second location information, user convenience can be improved. For example, when a plurality of locations where the base station apparatus is used are expected, a plurality of locations of use (the plurality of pieces of second location information) can be requested upon making a contract and mobile phones communicable with the base station apparatus can be registered in the base station apparatus for each location of use. In this manner, for example, operation is possible where, when the base station apparatus is installed in a home, mobile phones communicable with the base station apparatus are limited only to family members' mobile phones, and when the base station apparatus is installed in a workplace, mobile phones communicable with the base station apparatus are not limited.

According to a sixth aspect of the present invention, particularly in the base station apparatus of any one of the first to fifth aspects, predetermined information on communication between the mobile terminal and the base station apparatus is received from the management server of the mobile communication network through a neighbouring base station of the base station apparatus, the predetermined information being transmitted to the base station apparatus from the management server of the mobile communication network.

Here, the predetermined information includes information on a neighbouring cell of the base station apparatus, information on the transmission power of the base station apparatus, or the like.

According to the base station apparatus of the sixth aspect, the predetermined information on the communication between the mobile terminal and the base station apparatus is received from the management server of the mobile communication network through the neighbouring base station of the base station apparatus. Therefore, the predetermined information that possibly includes know-how can be avoided from flowing over the fixed communication network, which enables to prevent information leakage in the fixed communication network.

According to a seventh aspect of the present invention, particularly in the base station apparatus of any one of the first to fifth aspects, predetermined information on communication between the mobile terminal and the base station apparatus is received from the management server of the mobile communication network through the fixed communication network and the terminating device, the predetermined information being transmitted to the base station apparatus from the management server of the mobile communication network.

Here, the predetermined information includes information on a neighbouring cell of the base station apparatus, information on the transmission power of the base station apparatus, or the like.

According to the base station apparatus of the seventh aspect, the predetermined information on the communication between the mobile terminal and the base station apparatus is received from the management server of the mobile communication network through the fixed communication network and the terminating device. Therefore, even if the base station apparatus is installed in a location where radio waves transmitted from the neighbouring base station cannot reach and thus the base station apparatus cannot receive the predetermined information from the neighbouring base station, the base station apparatus can receive the predetermined information from the mobile communication network via the fixed communication network and the terminating device.

According to an eighth aspect of the present invention, a communication system includes: a fixed communication network; a mobile communication network; and a base station apparatus connected to the fixed communication network through a terminating device for a wire communication line, and communicable with a mobile terminal by radio communication, wherein the communication system has notifying means for notifying a management server of the mobile communication network, of first location information as location information related to the base station apparatus, the first location information being registered in a management server of the fixed communication network in connection with the terminating device.

Here, the terminating device includes any equipment installed indoors to terminate an outdoor wire communication line, such as an ONU, an ADSL modem, a VDSL modem, or a dial-up modem.

The way of notification of the first location information to the management server of the mobile communication network by the notifying means includes not only the way in which it is notified to the management server of the mobile communication network from the base station apparatus by the notifying means, but also the way in which the notifying means allows the management server of the fixed communication network to provide notification of location information destined for the management server of the mobile communication network.

The location information includes location information on the installed terminating device, such as address information or whereabouts information.

According to the communication system of the eighth aspect, the notifying means notifies the management server of the mobile communication network, of the first location information as the location information related to the base station apparatus. Therefore, comparing with the case of mounting a GPS signal receiver on the base station apparatus, the acquisition of the location information on the installed base station apparatus can be achieved with ease and low cost.

According to a ninth aspect of the present invention, a communication method uses a base station apparatus connected to a fixed communication network through a terminating device for a wire communication line, and communicable with a mobile terminal by radio communication, and the method includes: a step (A) of acquiring first location information from the fixed communication network, the first location information being registered in a management server of the fixed communication network in connection with the terminating device; and a step (B) of notifying a management server of a mobile communication network, of the first location information as location information related to the base station apparatus.

Here, the terminating device includes any equipment installed indoors to terminate an outdoor wire communication line, such as an ONU, an ADSL modem, a VDSL modem, or a dial-up modem.

The way of notification of the first location information to the management server of the mobile communication network in the step (B) includes not only the way in which it is notified to the management server of the mobile communication network from the base station apparatus, but also the way in which the base station apparatus allows the management server of the fixed communication network to provide notification of location information destined for the management server of the mobile communication network.

The location information includes location information on the installed terminating device, such as address information or whereabouts information.

According to the communication method of the ninth aspect, in the step (A), the first location information which is registered in the management server of the fixed communication network in connection with the terminating device is acquired from the fixed communication network. Then, in the step (B), the first location information is notified to the management server of the mobile communication network as the location information related to the base station apparatus. Therefore, comparing with the case of mounting a GPS signal receiver on the base station apparatus, the acquisition of location information on the installed base station apparatus can be achieved with ease and low cost.

According to a tenth aspect of the present invention, a program causes a computer mounted on a base station apparatus connected to a fixed communication network through a terminating device for a wire communication line and communicable with a mobile terminal by radio communication, to function as: acquiring means for acquiring first location information from the fixed communication network, the first location information being registered in a management server of the fixed communication network in connection with the terminating device; and notifying means for notifying a management server of a mobile communication network, of the first location information as location information related to the base station apparatus.

Here, the terminating device includes any equipment installed indoors to terminate an outdoor wire communication line, such as an ONU, an ADSL modem, a VDSL modem, or a dial-up modem.

The way of notification of the first location information to the mobile communication network by the notifying means includes not only the way in which it is notified to the management server of the mobile communication network from the base station apparatus by the notifying means, but also the way in which the notifying means allows the management server of the fixed communication network to provide notification of location information destined for the management server of the mobile communication network.

The location information includes location information on the installed terminating device, such as address information or whereabouts information.

According to the program of the tenth aspect, the acquiring means acquires, from the fixed communication network, the first location information which is registered in the management server of the fixed communication network in connection with the terminating device. Then, the notifying means notifies the management server of the mobile communication network, of the first location information as the location information related to the base station apparatus. Therefore, comparing with the case of mounting a GPS signal receiver on the base station apparatus, the acquisition of location information on the installed base station apparatus can be achieved with ease and low cost.

### ADVANTAGEOUS EFFECTS OF INVENTION

According the present invention, the acquisition of location information on an installed base station apparatus can be achieved with ease and low cost.

### BRIEF DESCRIPTION OF DRAWINGS

[Fig. 1] Fig. 1 is a diagram schematically showing an overall configuration of a communication system according to an embodiment of the present invention.
[Fig.2] Fig. 2 is a block diagram showing a functional configuration of a computer mounted on a femtocell base station.
[Fig. 3] Fig. 3 is a diagram showing a functional configuration of a processing unit.
[Fig.4] Fig. 4 is a diagram showing a first example of processing steps performed by the communication system when a new femtocell base station is installed.
[Fig. 5] Fig. 5 is a diagram showing a second example of processing steps performed by the communication system when a new femtocell base station is installed.
[Fig.6] Fig. 6 is a diagram showing a third example of processing steps performed by the communication system when a new femtocell base station is installed.
[Fig. 7] Fig. 7 is a diagram showing a fourth example of processing steps performed by the communication system when a new femtocell base station is installed.
[Fig. 8] Fig. 8 is a diagram showing a fifth example of processing steps performed by the communication system when a new femtocell base station is installed.
[Fig. 9] Fig. 9 is a diagram showing a sixth example of processing steps performed by the communication system when a new femtocell base station is installed.

### DESCRIPTION OF EMBODIMENTS

An embodiment of the present invention will be described in detail below with reference to the drawings. Note that those components denoted by the same reference signs in different drawings indicate the same or corresponding components.

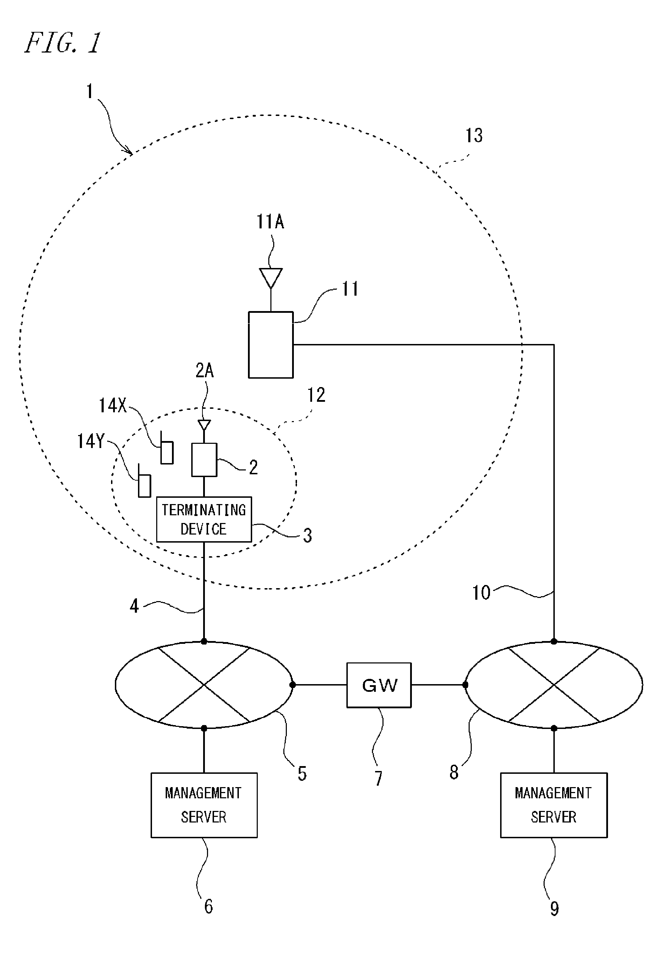

Fig. 1 is a diagram schematically showing an overall configuration of a communication system 1 according to the embodiment of the present invention. A compact base station 2 is installed indoors (e.g., in a user's home). The compact base station 2 has, as its coverage area, a very small cell with a radius of the order of several meters to several tens of meters. In this specification, the coverage area of the compact base station is hereinafter referred to as the "femtocell" and the compact base station is hereinafter referred to as the "femtocell base station". Referring to Fig. 1, a femtocell 12 which is the coverage area of the femtocell base station 2 is provided around the femtocell base station 2. A macrocell base station 11 is installed, for example, outdoors. A macrocell 13 which is the coverage area of the macrocell base station 11 is provided around the macrocell base station 11.

In the example shown in Fig. 1, the femtocell 12 is included in the macrocell 13. Therefore, mobile phones 14 (reference signs 14X and 14Y in Fig. 1) located within the femtocell 12 can perform transmission and reception of radio waves with an antenna 2A of the femtocell base station 2, and can also perform transmission and reception of radio waves with an antenna 11A of the macrocell base station 11. In addition, the femtocell base station 2A can receive radio waves transmitted from the macrocell base station 11. In the following description, it is assumed that the mobile phone 14X is owned by an authorized user of the femtocell base station 2, and the mobile phone 14Y is owned by a third person who is not an authorized user of the femtocell base station 2.

The macrocell base station 11 is connected through a communication line 10 to a mobile communication network 8 that is owned by a mobile network operator. The femtocell base station 2 is connected to a terminating device 3 that terminates a wire communication line 4 such as an optical fiber or a metal cable. The terminating device 3 is any equipment installed indoors to terminate the outdoor wire communication line 4 and is, for example, an ONU (Optical Network Unit), an ADSL modem, a VDSL modem, a dial-up modem, or the like. The terminating device 3 is installed in the same indoor location as the femtocell base station 2 (e.g., in the user's home). The terminating device 3 is connected to a fixed communication network 5 through the wire communication line 4. The fixed communication network 5 is a communication network owned by a fixed network operator or a public IP network. The fixed communication network 5 is connected to the mobile communication network 8 through a gateway 7. The fixed communication network 5 has a management server 6, and the mobile communication network 8 has a management server 9. The management server 9 may be an existing HLR (Home Location Register) or any dedicated server other than the HLR.
Here, the management server of the fixed communication network is an apparatus having the function of providing, as a service, the function of storing and managing first location information which is registered in connection with the terminating apparatus, in the fixed communication network. The management server of the fixed communication network includes various apparatuses arranged in the fixed communication network and having the above-described function.
The management server of the mobile communication network is an apparatus having the function of providing, as a service, the function of receiving and managing first location information serving as location information related to the base station apparatus, which is notified from the base station apparatus, in the mobile communication network. The management server of the mobile communication network is implemented by an apparatus arranged in the mobile communication network, e.g., an HLR (Home Location Register), a VLR (Visitor Location Register), an RNC (Radio Network Controller), an MSC (Mobile Switching Center), an SGSN (Service GPRS (General Packet Radio Service) Support Node), an MME (Mobility Management Entity), an S-GW (Serving SAE Gateway), a P-GW (PDN SAE Gateway), and an HSS (Home Subscriber Server). Alternatively, the base station apparatus may have the function of the management server of the mobile communication network.

The management server 6 has the location information on the terminating device 3 registered therein. The location information is information on the installed terminating device 3, such as address information or whereabouts information. In the following example, it is assumed that the location information on the terminating device 3 is address information which is submitted by a user as an installed location of the terminating device 3 when a contract is made between the user and the fixed network operator.

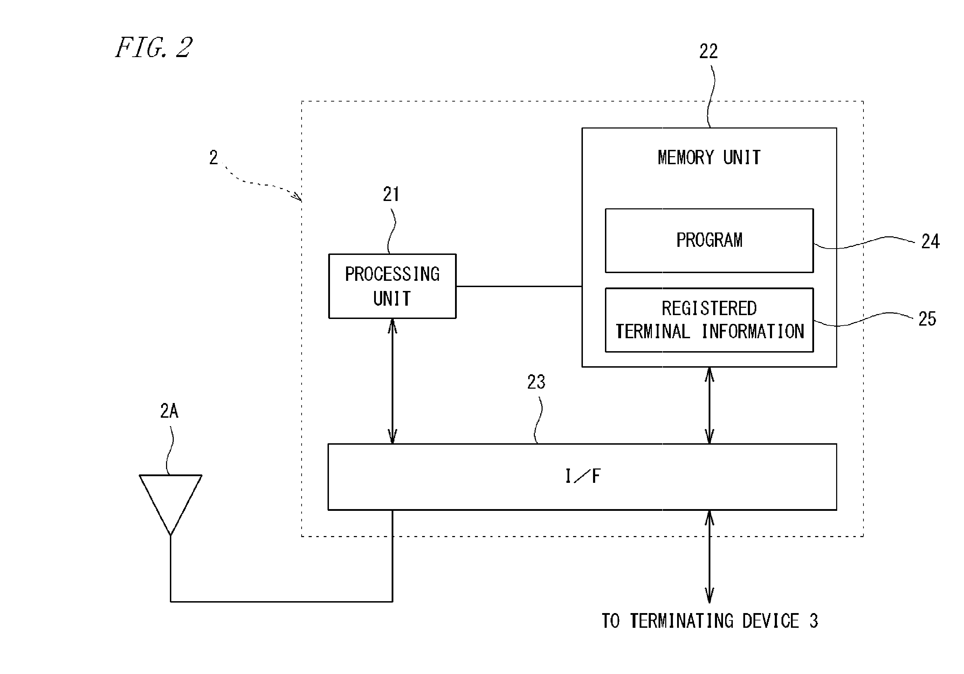

Fig. 2 is a block diagram showing a functional configuration of a computer mounted on the femtocell base station 2. The computer is configured to include a processing unit 21 such as a CPU; a memory unit 22 such as a semiconductor memory; and an input/output interface 23. The memory unit 22 has a program 24 and registered terminal information 25 stored therein. The processing unit 21 operates according to the program 24.

The registered terminal information 25 is unique identification information on a mobile phone 14 (in this example, the mobile phone 14X) which is allowed to perform communication with the femtocell base station 2, and is, for example, a phone number or an IMSI (International Mobile Subscriber Identity) of the mobile phone 14X. Any method is used to register the registered terminal information 25 in the memory unit 22. For example, such information can be registered upon purchasing the femtocell base station 2 by using a dedicated terminal at the store. Alternatively, such information can be registered via the Internet by using dedicated application software, after installing the femtocell base station 2 in a home. Still alternatively, the phone number, the IMSI, or the like, of the mobile phone 14X can be registered by connecting the mobile phone 14X to the femtocell base station 2 by wire or wireless.

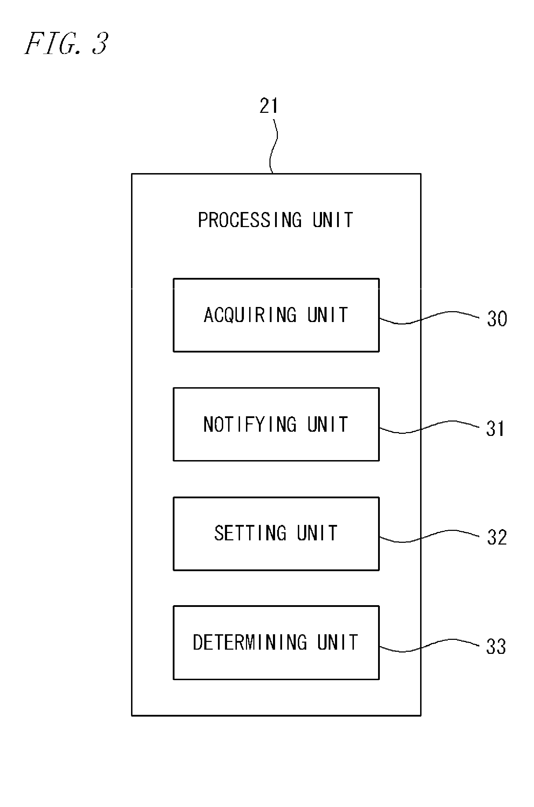

Fig. 3 is a diagram showing a functional configuration of the processing unit 21. By operating according to the program 24, the processing unit 21 functions as an acquiring unit 30, a notifying unit 31, a setting unit 32, and a determining unit 33. In other words, the program 24 is a program for allowing the processing unit 21 to function as the acquiring unit 30, the notifying unit 31, the setting unit 32, and the determining unit 33.

Here, to perform planning and installation of a base station by the mobile network operator, there is a need to collect location information on the installed femtocell base station 2 and register the collected information in the management server 9.

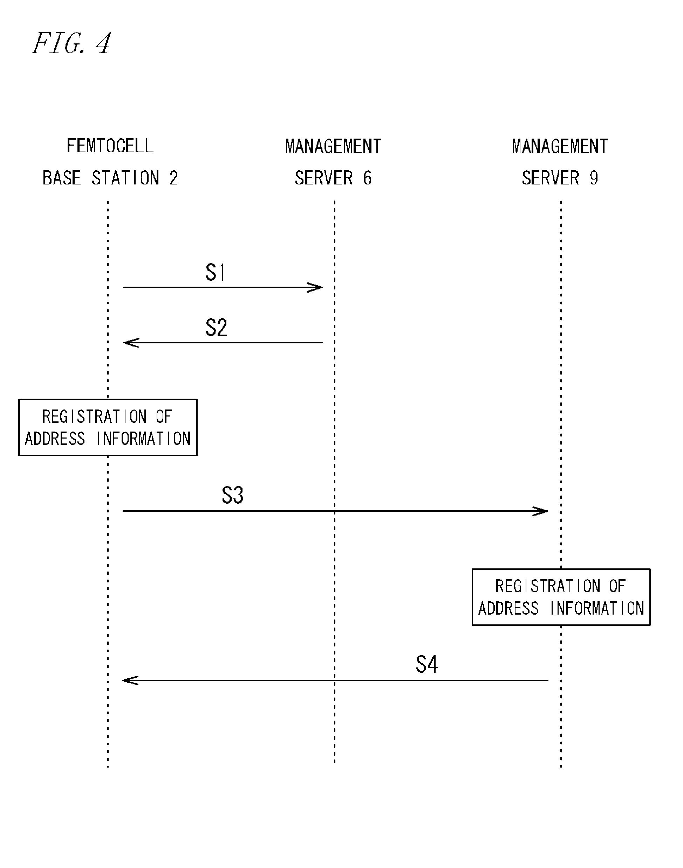

Fig. 4 is a diagram showing a first example of processing steps performed by the communication system 1 when a new femtocell base station 2 is installed. When the femtocell base station 2 is connected to the terminating device 3, first, the acquiring unit 30 transmits an address information acquisition request S1 to the management server 6. The address information acquisition request S1 is transmitted to the management server 6 from the femtocell base station 2 through the terminating device 3 and the fixed communication network 5.

Then, the management server 6 transmits an address information acquisition response S2 including address information on the corresponding terminating device 3, to the femtocell base station 2. The address information acquisition response S2 is transmitted to the femtocell base station 2 from the management server 6 through the fixed communication network 5 and the terminating device 3.

Then, the acquiring unit 30 registers, in the memory unit 22, the address information on the terminating device 3, which is included in the address information acquisition response S2 received from the management server 6.
In this manner, the acquiring unit 30 acquires, from the fixed communication network 5, the address information (first location information) on the terminating device 3, which is registered in the management server 6.

Then, the notifying unit 31 transmits an address information notification S3 to the management server 9. The address information notification S3 includes unique identification information on the femtocell base station 2 and also includes the address information on the terminating device 3 received from the management server 6, as address information on the femtocell base station 2. The address information notification S3 is transmitted to the management server 9 from the femtocell base station 2 through the terminating device 3, the fixed communication network 5, and the mobile communication network 8. In this manner, the notifying unit 31 notifies the management server 9 of the mobile communication network 8, of the first location information as location information related to the femtocell base station 2.

Then, the management server 9 registers the unique identification information and the address information on the femtocell base station 2, which are included in the address information notification S3 received from the femtocell base station 2, such that these pieces of information are associated with each other.

The management server 9 then locates the macrocell base station 11 installed around the femtocell base station 2, based on the address information on the femtocell base station 2. In addition, the management server 9 calculates a cell size expandable by the femtocell base station 2 (i.e., the transmission power of the femtocell base station 2), based on the distance between the femtocell base station 2 and the macrocell base station 11 and the setting conditions of the macrocell 13. Then, the management server 9 transmits a configuration information notification S4 including neighbouring cell information on the macrocell base station 11 and the macrocell 13 and setting information on the transmission power of the femtocell base station 2, to the femtocell base station 2. The configuration information notification S4 is transmitted to the femtocell base station 2 from the management server 9 through the mobile communication network 8, the fixed communication network 5, and the terminating device 3. Notifying the femtocell base station 2 of the neighbouring cell information enables to support processes such as inter-cell handover and cell reselection.

Then, the setting unit 32 registers, in the memory unit 22, the neighbouring cell information included in the configuration information notification S4 which is received from the management server 9, and sets the transmission power of the femtocell base station 2 based on the setting information on the transmission power included in the configuration information notification S4.

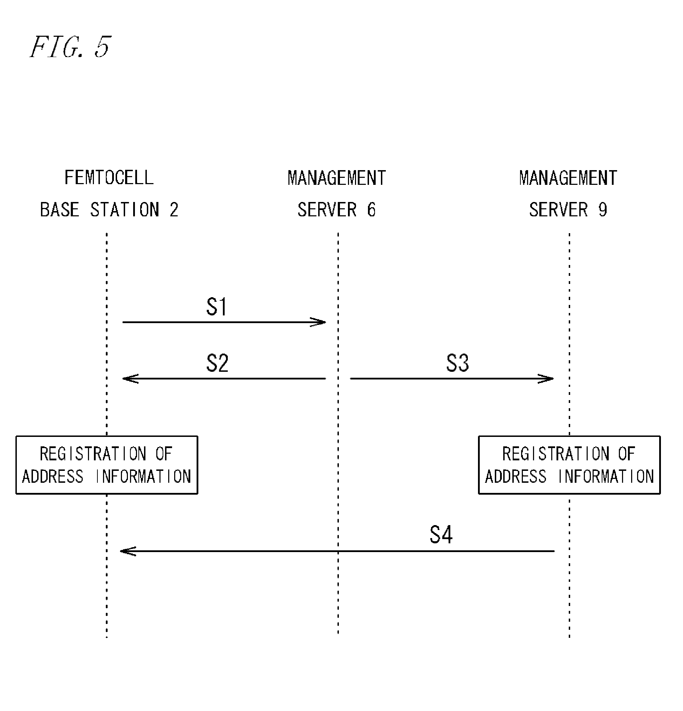

Fig. 5 is a diagram showing a second example of processing steps performed by the communication system 1 when a new femtocell base station 2 is installed. When the femtocell base station 2 is connected to the terminating device 3, first, the acquiring unit 30 transmits an address information acquisition request S1 to the management server 6. The address information acquisition request S1 includes unique identification information on the femtocell base station 2. The address information acquisition request S1 is transmitted to the management server 6 from the femtocell base station 2 through the terminating device 3 and the fixed communication network 5.

Then, the management server 6 transmits an address information acquisition response S2 including address information on the corresponding terminating device 3, to the femtocell base station 2. Along with this transmission, the management server 6 transmits an address information notification S3 to the management server 9. The address information notification S3 includes the unique identification information on the femtocell base station 2 and also includes the address information on the terminating device 3 as address information on the femtocell base station 2. The address information acquisition response S2 is transmitted to the femtocell base station 2 from the management server 6 through the fixed communication network 5 and the terminating device 3. The address information notification S3 is transmitted to the management server 9 from the management server 6 through the fixed communication network 5 and the mobile communication network 8.

Then, the acquiring unit 30 registers, in the memory unit 22, the address information on the terminating device 3, which is included in the address information acquisition response S2 received from the management server 6. The management server 9 registers the unique identification information and the address information on the femtocell base station 2, which are included in the address information notification S3 received from the management server 6, such that those pieces of information are associated with each other.

The management server 9 then locates the macrocell base station 11 installed around the femtocell base station 2, based on the address information on the femtocell base station 2. In addition, the management server 9 calculates a cell size expandable by the femtocell base station 2 (i.e., the transmission power of the femtocell base station 2), based on the distance between the femtocell base station 2 and the macrocell base station 11 and the setting conditions of the macrocell 13. Then, the management server 9 transmits a configuration information notification S4 including neighbouring cell information on the macrocell base station 11 and the macrocell 13 and setting information on the transmission power of the femtocell base station 2, to the femtocell base station 2. The configuration information notification S4 is transmitted to the femtocell base station 2 from the management server 9 through the mobile communication network 8, the fixed communication network 5, and the terminating device 3. Notifying the femtocell base station 2 of the neighbouring cell information enables to support processes such as inter-cell handover and cell reselection.

Then, the setting unit 32 registers, in the memory unit 22, the neighbouring cell information included in the configuration information notification S4 which is received from the management server 9, and sets the transmission power of the femtocell base station 2 based on the setting information on the transmission power included in the configuration information notification S4.

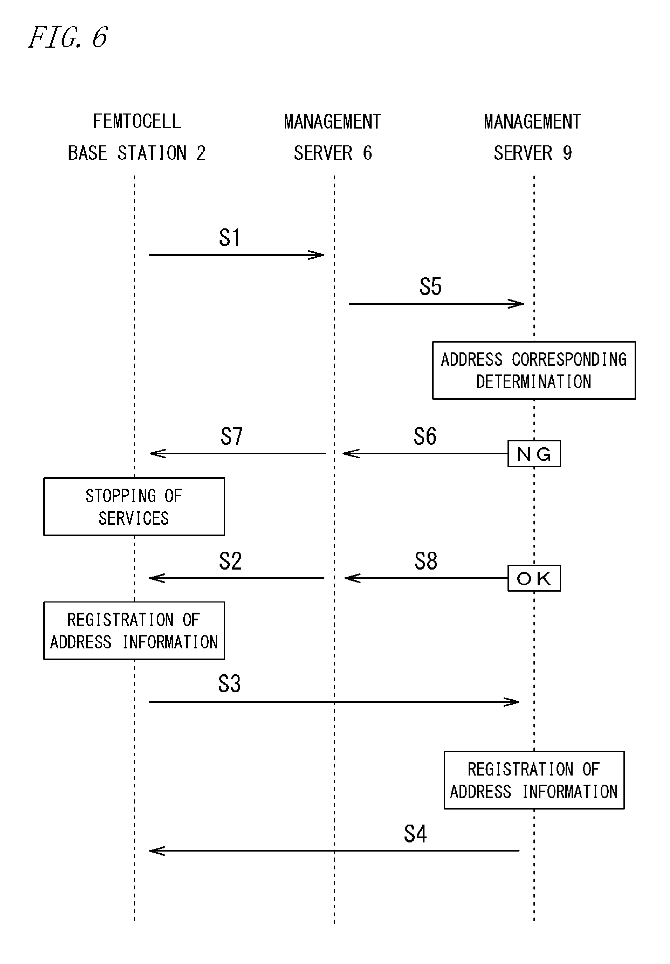

Fig. 6 is a diagram showing a third example of processing steps performed by the communication system 1 when a new femtocell base station 2 is installed. In this example, in the management server 9, location information on the femtocell base station 2 is registered in advance. The location information is on an installed location of the femtocell base station 2, such as address information or whereabouts information. In the following example, it is assumed that the location information is address information which is submitted by a user as a planned installed location of the femtocell base station 2 when purchasing the femtocell base station 2. In the management server 9, unique identification information on the femtocell base station 2 and the address information submitted by the user are registered so as to be associated with each other.

When the femtocell base station 2 is connected to the terminating device 3, first, the acquiring unit 30 transmits an address information acquisition request S1 to the management server 6. The address information acquisition request S1 includes the unique identification information on the femtocell base station 2. The address information acquisition request S1 is transmitted to the management server 6 from the femtocell base station 2 through the terminating device 3 and the fixed communication network 5.

Then, the management server 6 transmits a confirmation request S5 for address information to the management server 9. The confirmation request S5 includes the unique identification information on the femtocell base station 2 and address information on the corresponding terminating device 3. The confirmation request S5 is transmitted to the management server 9 from the management server 6 through the fixed communication network 5 and the mobile communication network 8.

Then, the management server 9 compares the address information on the terminating device 3, which is included in the confirmation request S5 received from the management server 6, with the address information on the femtocell base station 2 (hereinafter, referred to as the "pre-registered address information"), which is registered in the management server 9 in advance in association with the same unique identification information, and thereby determines whether they correspond or not.

If the address information on the terminating device 3 and the pre-registered address information on the femtocell base station 2 do not correspond, then the management server 9 transmits a confirmation response S6 indicating that they do not correspond, to the management server 6. The confirmation response S6 is transmitted to the management server 6 from the management server 9 through the mobile communication network 8 and the fixed communication network 5. Then, the management server 6 transmits a rejection notification S7 indicating rejection of use of the femtocell base station 2, to the femtocell base station 2. The rejection notification S7 does not include the address information on the terminating device 3. The rejection notification S7 is transmitted to the femtocell base station 2 from the management server 6 through the fixed communication network 5 and the terminating device 3.
The setting unit 32 of the femtocell base station 2 having received the rejection notification S7 which is a comparison result between the address information on the terminating device 3 and the pre-registered address information, determines to stop the services of the femtocell base station 2 being itself and performs setting to stop the services.

On the other hand, if the address information on the terminating device 3 and the pre-registered address information on the femtocell base station 2 correspond, then the management server 9 transmits a confirmation response S8 indicating that they correspond, to the management server 6. The confirmation response S8 is transmitted to the management server 6 from the management server 9 through the mobile communication network 8 and the fixed communication network 5. Then, the management server 6 transmits an address information acquisition response S2 including the address information on the terminating device 3, to the femtocell base station 2. The address information acquisition response S2 is transmitted to the femtocell base station 2 from the management server 6 through the fixed communication network 5 and the terminating device 3.

The acquiring unit 30 of the femtocell base station 2 having received the address information acquisition response S2 which is a comparison result between the address information on the terminating device 3 and the pre-registered address information, determines to perform the services of the femtocell base station 2 being itself and registers, in the memory unit 22, the address information on the terminating device 3, which is included in the address information acquisition response S2 received from the management server 6.

Then, the notifying unit 31 transmits an address information notification S3 to the management server 9. The address information notification S3 includes the unique identification information on the femtocell base station 2 and also includes the address information on the terminating device 3 received from the management server 6, as address information on the femtocell base station 2. The address information notification S3 is transmitted to the management server 9 from the femtocell base station 2 through the terminating device 3, the fixed communication network 5, and the mobile communication network 8.

Then, the management server 9 registers the unique identification information and the address information on the femtocell base station 2, which are included in the address information notification S3 received from the femtocell base station 2, such that those pieces of information are associated with each other.

The management server 9 then locates the macrocell base station 11 installed around the femtocell base station 2, based on the address information on the femtocell base station 2. In addition, the management server 9 calculates a cell size expandable by the femtocell base station 2 (i.e., the transmission power of the femtocell base station 2), based on the distance between the femtocell base station 2 and the macrocell base station 11 and the setting conditions of the macrocell 13. Then, the management server 9 transmits a configuration information notification S4 including neighbouring cell information on the macrocell base station 11 and the macrocell 13 and setting information on the transmission power of the femtocell base station 2, to the femtocell base station 2. The configuration information notification S4 is transmitted to the femtocell base station 2 from the management server 9 through the mobile communication network 8, the fixed communication network 5, and the terminating device 3. Notifying the femtocell base station 2 of the neighbouring cell information enables to support processes such as inter-cell handover and cell reselection.

Then, the setting unit 32 registers, in the memory unit 22, the neighbouring cell information included in the configuration information notification S4 which is received from the management server 9, and sets the transmission power of the femtocell base station 2 based on the setting information on the transmission power included in the configuration information notification S4.

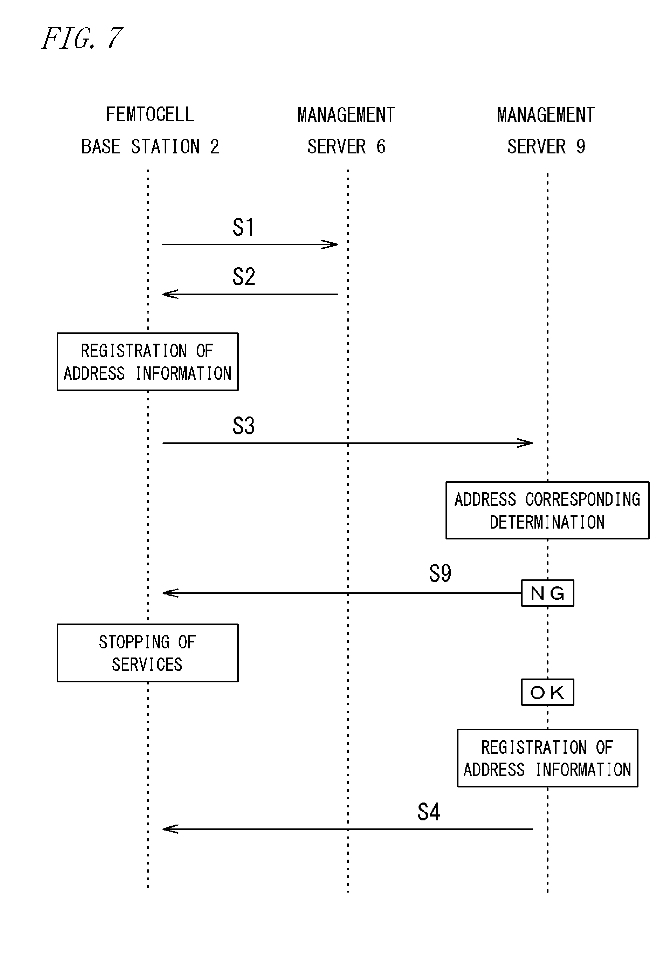

Fig. 7 is a diagram showing a fourth example of processing steps performed by the communication system 1 when a new femtocell base station 2 is installed. In this example, as in the above-described third example, in the management server 9, pre-registered address information on the femtocell base station 2 is registered in advance.

When the femtocell base station 2 is connected to the terminating device 3, first, the acquiring unit 30 transmits an address information acquisition request S1 to the management server 6. The address information acquisition request S1 is transmitted to the management server 6 from the femtocell base station 2 through the terminating device 3 and the fixed communication network 5.

Then, the management server 6 transmits an address information acquisition response S2 including address information on the corresponding terminating device 3, to the femtocell base station 2. The address information acquisition response S2 is transmitted to the femtocell base station 2 from the management server 6 through the fixed communication network 5 and the terminating device 3.

Then, the acquiring unit 30 registers, in the memory unit 22, the address information on the terminating device 3, which is included in the address information acquisition response S2 received from the management server 6.

Then, the notifying unit 31 transmits an address information notification S3 to the management server 9. The address information notification S3 includes unique identification information on the femtocell base station 2 and also includes the address information on the terminating device 3 received from the management server 6, as address information on the femtocell base station 2. The address information notification S3 is transmitted to the management server 9 from the femtocell base station 2 through the terminating device 3, the fixed communication network 5, and the mobile communication network 8.

Then, the management server 9 compares the address information on the femtocell base station 2, which is included in the address information notification S3 received from the femtocell base station 2, with the pre-registered address information on the femtocell base station 2, which is registered in the management server 9 in advance in association with the same unique identification information, and thereby determines whether they correspond or not.

If the address information on the femtocell base station 2 included in the address information notification S3 and the pre-registered address information on the femtocell base station 2 do not correspond, then the management server 9 transmits a rejection notification S9 indicating rejection of use of the femtocell base station 2, to the femtocell base station 2. The rejection notification S9 is transmitted to the femtocell base station 2 from the management server 9 through the mobile communication network 8, the fixed communication network 5, and the terminating device 3.
The setting unit 32 of the femtocell base station 2 having received the rejection notification S9 which is a comparison result between the address information on the terminating device 3 and the pre-registered address information, determines to stop the services of the femtocell base station 2 being itself and performs setting to stop the services.
Note that the setting unit 32 of the femtocell base station 2 performs the services of the femtocell base station 2 being itself, if not receiving a rejection notification S9. In other words, the setting unit 32 of the femtocell base station 2 determines whether or not to perform the services of the femtocell base station 2 being itself, according to the reception of a rejection notification S9.

On the other hand, if the address information on the femtocell base station 2 included in the address information notification S3 and the pre-registered address information on the femtocell base station 2 correspond, then the management server 9 registers the unique identification information and the address information on the femtocell base station 2 included in the address information notification S3, such that those pieces of information are associated with each other.

The management server 9 then locates the macrocell base station 11 installed around the femtocell base station 2, based on the address information on the femtocell base station 2. In addition, the management server 9 calculates a cell size expandable by the femtocell base station 2 (i.e., the transmission power of the femtocell base station 2), based on the distance between the femtocell base station 2 and the macrocell base station 11 and the setting conditions of the macrocell 13. Then, the management server 9 transmits a configuration information notification S4 including neighbouring cell information on the macrocell base station 11 and the macrocell 13 and setting information on the transmission power of the femtocell base station 2, to the femtocell base station 2. The configuration information notification S4 is transmitted to the femtocell base station 2 from the management server 9 through the mobile communication network 8, the fixed communication network 5, and the terminating device 3. Notifying the femtocell base station 2 of the neighbouring cell information enables to support processes such as inter-cell handover and cell reselection.

Then, the setting unit 32 registers, in the memory unit 22, the neighbouring cell information included in the configuration information notification S4 which is received from the management server 9, and sets the transmission power of the femtocell base station 2 based on the setting information on the transmission power included in the configuration information notification S4.

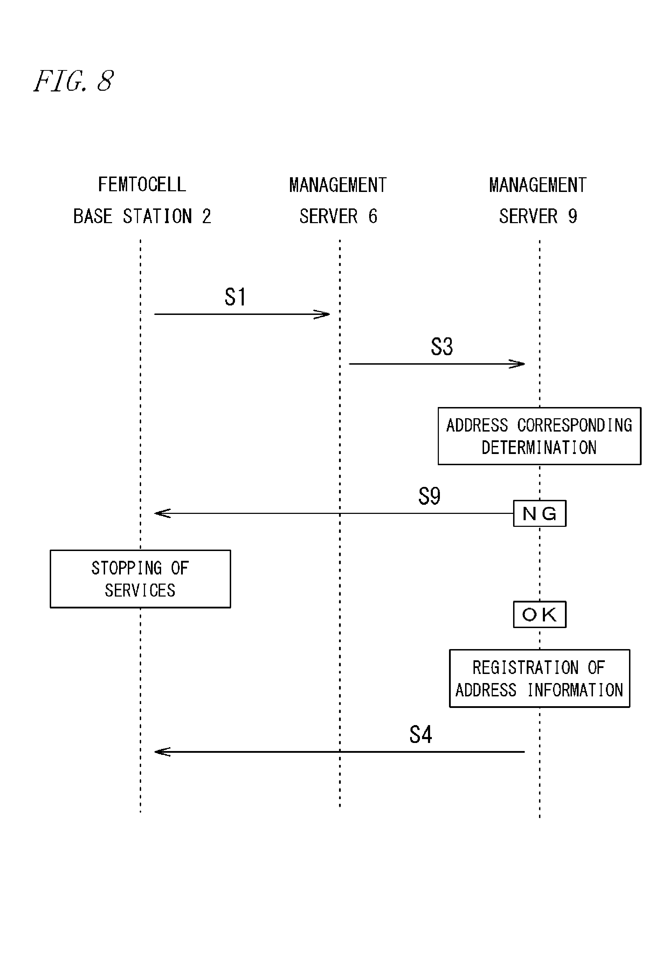

Fig. 8 is a diagram showing a fifth example of processing steps performed by the communication system 1 when a new femtocell base station 2 is installed. In this example, as in the above-described third example, in the management server 9, pre-registered address information on the femtocell base station 2 is registered in advance.

When the femtocell base station 2 is connected to the terminating device 3, first, the acquiring unit 30 transmits an address information acquisition request S1 to the management server 6. The address information acquisition request S1 is transmitted to the management server 6 from the femtocell base station 2 through the terminating device 3 and the fixed communication network 5.

Then, the management server 6 transmits an address information notification S3 to the management server 9. The address information notification S3 includes unique identification information on the femtocell base station 2 and also includes address information on the terminating device 3 as address information on the femtocell base station 2. The address information notification S3 is transmitted to the management server 9 from the management server 6 through the fixed communication network 5 and the mobile communication network 8.

Then, the management server 9 compares the address information on the femtocell base station 2, which is included in the address information notification S3 received from the management server 6, with the pre-registered address information on the femtocell base station 2, which is registered in the management server 9 in advance in association with the same unique identification information, and thereby determines whether they correspond or not.

If the address information on the femtocell base station 2 included in the address information notification S3 and the pre-registered address information on the femtocell base station 2 do not correspond, then the management server 9 transmits a rejection notification S9 indicating rejection of use of the femtocell base station 2, to the femtocell base station 2. The rejection notification S9 is transmitted to the femtocell base station 2 from the management server 9 through the mobile communication network 8, the fixed communication network 5, and the terminating device 3.
The setting unit 32 of the femtocell base station 2 having received the rejection notification S9 which is a comparison result between the address information on the terminating device 3 and the pre-registered address information, determines to stop the services of the femtocell base station 2 being itself and performs setting to stop the services.
Note that the setting unit 32 of the femtocell base station 2 performs the services of the femtocell base station 2 being itself, if not receiving a rejection notification S9. In other words, the setting unit 32 of the femtocell base station 2 determines whether or not to perform the services of the femtocell base station 2 being itself, according to the reception of a rejection notification S9.

On the other hand, if the address information on the femtocell base station 2 included in the address information notification S3 and the pre-registered address information on the femtocell base station 2 correspond, then the management server 9 registers the unique identification information and the address information on the femtocell base station 2 included in the address information notification S3, such that those pieces of information are associated with each other.

The management server 9 then locates the macrocell base station 11 installed around the femtocell base station 2, based on the address information on the femtocell base station 2. In addition, the management server 9 calculates a cell size expandable by the femtocell base station 2 (i.e., the transmission power of the femtocell base station 2), based on the distance between the femtocell base station 2 and the macrocell base station 11 and the setting conditions of the macrocell 13. Then, the management server 9 transmits a configuration information notification S4 including neighbouring cell information on the macrocell base station 11 and the macrocell 13 and setting information on the transmission power of the femtocell base station 2, to the femtocell base station 2. The configuration information notification S4 is transmitted to the femtocell base station 2 from the management server 9 through the mobile communication network 8, the fixed communication network 5, and the terminating device 3. Notifying the femtocell base station 2 of the neighbouring cell information enables to support processes such as inter-cell handover and cell reselection.

Then, the setting unit 32 registers, in the memory unit 22, the neighbouring cell information included in the configuration information notification S4 which is received from the management server 9, and sets the transmission power of the femtocell base station 2 based on the setting information on the transmission power included in the configuration information notification S4.

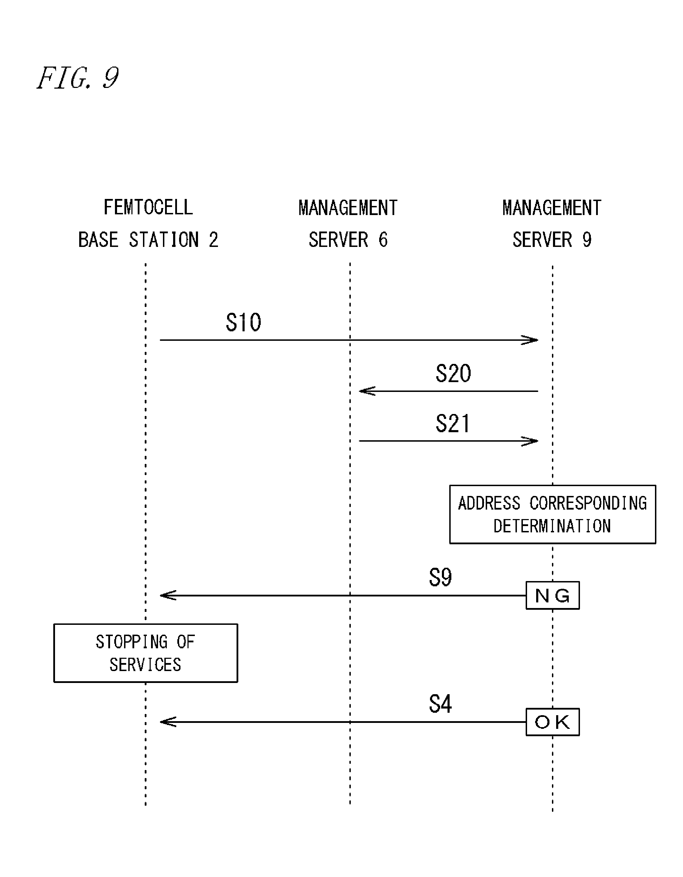

Fig. 9 is a diagram showing a sixth example of processing steps performed by the communication system 1 when a new femtocell base station 2 is installed. In this example, as in the above-described third example, in the management server 9, pre-registered address information on the femtocell base station 2 is registered in advance.

When the femtocell base station 2 is connected to the terminating device 3, first, the notifying unit 31 transmits a unique identification information notification S10 to the management server 9. The unique identification information notification S10 includes unique identification information on the femtocell base station 2. In addition, the unique identification information notification S10 includes unique identification information on the corresponding terminating device 3. The unique identification information notification S10 is transmitted to the management server 9 from the femtocell base station 2 through the terminating device 3, the fixed communication network 5, and the mobile communication network 8.

Then, the management server 9 transmits an address information acquisition request S20 to the management server 6. The address information acquisition request S20 is transmitted to the management server 6 from the management server 9 through the mobile communication network 8 and the fixed communication network 5.

Then, the management server 6 transmits an address information acquisition response S21 including address information on the corresponding terminating device 3, to the management server 9. The address information acquisition response S21 is transmitted to the management server 9 from the management server 6 through the fixed communication network 5 and the mobile communication network 8.

Then, the management server 9 compares the address information on the terminating device 3, which is included in the address information acquisition response S21 received from the management server 6, with the pre-registered address information on the femtocell base station 2, which is registered in the management server 9 in advance in association with the unique identification information on the femtocell base station 2, which is included in the unique identification information notification S10, and thereby determines whether they correspond or not.

If the address information on the terminating device 3 included in the address information acquisition response S21 and the pre-registered address information on the femtocell base station 2 do not correspond, then the management server 9 transmits a rejection notification S9 indicating rejection of use of the femtocell base station 2, to the femtocell base station 2. The rejection notification S9 is transmitted to the femtocell base station 2 from the management server 9 through the mobile communication network 8, the fixed communication network 5, and the terminating device 3.
The setting unit 32 of the femtocell base station 2 having received the rejection notification S9 which is a comparison result between the address information on the terminating device 3 and the pre-registered address information, determines to stop the services of the femtocell base station 2 being itself and performs setting to stop the services.
Note that the setting unit 32 of the femtocell base station 2 performs the services of the femtocell base station 2 being itself, if not receiving a rejection notification S9. In other words, the setting unit 32 of the femtocell base station 2 determines whether or not to perform the services of the femtocell base station 2 being itself, according to the reception of a rejection notification S9.

On the other hand, if the address information on the terminating device 3 included in the address information acquisition response S21 and the pre-registered address information on the femtocell base station 2 correspond, then the management server 9 registers the address information on the terminating device 3 included in the address information acquisition response S21, as address information on the femtocell base station 2 such that the address information is associated with the unique identification information on the femtocell base station 2.

The management server 9 then locates the macrocell base station 11 installed around the femtocell base station 2, based on the address information on the femtocell base station 2. In addition, the management server 9 calculates a cell size expandable by the femtocell base station 2 (i.e., the transmission power of the femtocell base station 2), based on the distance between the femtocell base station 2 and the macrocell base station 11 and the setting conditions of the macrocell 13. Then, the management server 9 transmits a configuration information notification S4 including neighbouring cell information on the macrocell base station 11 and the macrocell 13 and setting information on the transmission power of the femtocell base station 2, to the femtocell base station 2. The configuration information notification S4 is transmitted to the femtocell base station 2 from the management server 9 through the mobile communication network 8, the fixed communication network 5, and the terminating device 3. Notifying the femtocell base station 2 of the neighbouring cell information enables to support processes such as inter-cell handover and cell reselection.

Then, the setting unit 32 registers, in the memory unit 22, the neighbouring cell information included in the configuration information notification S4 which is received from the management server 9, and sets the transmission power of the femtocell base station 2 based on the setting information on the transmission power included in the configuration information notification S4.

In the examples shown in Figs. 4 to 9, after the setting of the transmission power of the femtocell base station 2 is completed, the femtocell base station 2 is brought into a usable state and thus starts radio wave transmission.

The determining unit 33 determines whether or not unique identification information (a phone number, an IMSI, or the like) of a mobile phone 14 having accessed the femtocell base station 2 correspond es the registered terminal information 25 stored in the memory unit 22. If they correspond, then the determining unit 33 allows the mobile phone 14 to perform communication with the femtocell base station 2. If they do not correspond, then the determining unit 33 prohibits the mobile phone 14 from performing communication with the femtocell base station 2.

As such, in the femtocell base station 2 according to the present embodiment, the acquiring unit 30 acquires, from the fixed communication network 5, address information (first location information) on the terminating device 3, which is registered in the management server 6. Then, the notifying unit 31 notifies the management server 9 of the mobile communication network 8, of the first location information as location information related to the femtocell base station 2. Therefore, comparing with the case of mounting a GPS signal receiver on the femtocell base station 2, the acquisition of the location information on the installed femtocell base station 2 can be achieved with ease and low cost.

In addition, according to the example shown in Fig. 6, in the management server 9 of the mobile communication network 8, pre-registered address information (second location information) related to the femtocell base station 2 is registered in advance. Then, based on a comparison result between first location information and the second location information, it is determined whether or not to allow the acquiring unit 30 to acquire the first location information. Therefore, by not allowing the acquiring unit 30 to acquire first location information when address information or the like requested upon making a contract (second location information) differs from the actual installed location (first location information), the first location information can be prevented from being acquired by an unauthorized femtocell base station 2.

In addition, according to the examples shown in Figs. 6 to 9, in the management server 9 of the mobile communication network 8, the pre-registered address information related to the femtocell base station 2 (second location information) is registered in advance. Then, based on a comparison result between first location information and the second location information, it is determined whether or not to allow use of the femtocell base station 2. Therefore, by not allowing use of the femtocell base station 2 when address information or the like requested upon making a contract (second location information) differs from the actual installed location (first location information), unauthorized use of the femtocell base station 2 can be prevented.

In addition, in the femtocell base station 2 according to the present embodiment, a configuration information notification S4 about communication between a mobile phone 14 and the femtocell base station 2 is transmitted to the femtocell base station 2 from the mobile communication network 8 through the fixed communication network 5 and the terminating device 3. Therefore, even if the femtocell base station 2 is installed in a location where radio waves transmitted from the macrocell base station 11 cannot reach and thus the femtocell base station 2 cannot receive a configuration information notification S4 from the macrocell base station 11, the femtocell base station 2 can receive a configuration information notification S4 from the mobile communication network 8 via the fixed communication network 5 and the terminating device 3.

### <First Variant>

In the above-described embodiment, the management server 9 compares the address information on the terminating device 3 with the pre-registered address information on the femtocell base station 2, and if they do not correspond then a process of rejecting use of the femtocell base station 2 is performed.

In contrast to this embodiment, even if they do not correspond, use of the femtocell base station 2 may be allowed; instead, when they do not correspond, a process may be performed in which limitations on a mobile phone 14 that is allowed to perform communication with the femtocell base station 2 (i.e., limitations based on registered terminal information 25) are made invalid.

For example, when a femtocell base station 2 is purchased, home address information is submitted and information on family members' mobile phones is registered as registered terminal information 25. In this case, when the femtocell base station 2 is installed in a home, mobile phones 14 communicable with the femtocell base station 2 are limited only to the family members' mobile phones. On the other hand, when the femtocell base station 2 is carried and installed in a workplace, arbitrary mobile phones 14 are allowed to perform communication with the femtocell base station 2.

According to the first variant, in the management server 9 of the mobile communication network 8, pre-registered address information related to the femtocell base station 2 is registered in advance. Then, based on a comparison result between address information on the terminating device 3 and the pre-registered address information on the femtocell base station 2, the femtocell base station 2 determines a mobile phone 14 communicable with the femtocell base station 2. In this manner, user convenience can be improved.

### <Second Variant>

In the examples shown in Figs. 6 to 9, one piece of pre-registered address information is registered in the management server 9 for one piece of unique identification information on the femtocell base station 2.

In contrast to these examples, a plurality of pieces of pre-registered address information may be registered in the management server 9 for one piece of unique identification information on the femtocell base station 2. In addition, in this case, pieces of registered terminal information 25 may be individually set for the respective pieces of pre-registered address information.

For example, by submitting home address information and work address information when a femtocell base station 2 is purchased, a home address and a work address are registered in the management server 9 as pieces of pre-registered address information. Then, for the home address, information on family members' mobile phones is registered as registered terminal information 25, and for the work address, information on colleagues' mobile phones is registered as registered terminal information 25. In this case, when the femtocell base station 2 is installed in the home, mobile phones 14 communicable with the femtocell base station 2 are limited only to the family members' mobile phones. On the other hand, when the femtocell base station 2 is carried and installed in the workplace, mobile phones 14 communicable with the femtocell base station 2 are limited only to the colleagues' mobile phones. Note that, when an address does not correspond to either of the pieces of pre-registered address information, as in the above-described embodiment, use of the femtocell base station 2 may be rejected or, as in the above-described first variant, a process of making limitations based on the registered terminal information 25 invalid may be performed.

According to the second variant, in the management server 9 of the mobile communication network 8, the plurality of pieces of pre-registered address information related to the femtocell base station 2 are registered in advance. Then, based on a comparison result between the address information on the terminating device 3 and the plurality of pieces of pre-registered address information on the femtocell base station 2, the femtocell base station 2 determines the content of a process performed by the femtocell base station 2. In this manner, user convenience can be improved.

### <Third Variant>

In the above-described embodiment, a configuration information notification S4 is transmitted to the femtocell base station 2 from the management server 9 through the mobile communication network 8, the fixed communication network 5, and the terminating device 3.

In contrast to this embodiment, when, as shown in Fig. 1, the femtocell 12 is included in the macrocell 13 and thus the femtocell base station 2 is in a situation of being capable of receiving radio waves transmitted from the macrocell base station 11, a configuration information notification S4 may be transmitted to the femtocell base station 2 from the management server 9 through the mobile communication network 8 and the macrocell base station 11.

According to the third variant, the configuration information notification S4 is transmitted to the femtocell base station 2 from the mobile communication network 8 through the macrocell base station 11, and the femtocell base station 2 receives the configuration information notification S4 through the macrocell base station 11 serving as a neighbouring base station. Therefore, the configuration information notification S4 that possibly includes know-how can be avoided from flowing over the fixed communication network 5, which enables to prevent information leakage in the fixed communication network 5.

In addition, the femtocell base station 2 may have the function of receiving and managing first location information serving as location information related to another base station, which is notified from this other base station in the mobile communication network 8, and managing first location information thereof, and the function of providing the above-described function as a service, i.e., the functions of the management server of the mobile communication network.

Note that the embodiment disclosed herein is to be considered in all the respects as illustrative and not restrictive. The scope of the present invention is indicated by the appended claims rather than by the foregoing meanings, and all the changes that come within the meanings and the range of equivalency of the claims are therefore intended to be embraced therein.

### REFERENCE SIGNS LIST

1: COMMUNICATION SYSTEM
2: FEMTOCELL BASE STATION
3: TERMINATING DEVICE
5: FIXED COMMUNICATION NETWORK
6 and 9: MANAGEMENT SERVER
8: MOBILE COMMUNICATION NETWORK
11: MACROCELL BASE STATION
14 (14X and 14Y): MOBILE PHONE
21: PROCESSING UNIT
22: MEMORY UNIT
24: PROGRAM
25: REGISTERED TERMINAL INFORMATION
30: ACQUIRING UNIT
31: NOTIFYING UNIT
32: SETTING UNIT
33: DETERMINING UNIT

## Claims

1. Abase station apparatus connected to a fixed communication network through a terminating device for a wire communication line, and communicable with a mobile terminal by radio communication, the base station apparatus comprising:
acquiring means for acquiring first location information from the fixed communication network, the first location information being registered in a management server of the fixed communication network in connection with the terminating device; and
notifying means for notifying a management server of a mobile communication network, of the first location information as location information related to the base station apparatus.

2. The base station apparatus according to claim 1, wherein it is determined whether or not to allow the acquiring means to acquire the first location information, based on a comparison result between the first location information and the second location information related to the base station apparatus, the second location information being registered in advance in the management server of the mobile communication network.

3. The base station apparatus according to claim 1, wherein it is determined whether or not to allow use of the base station apparatus, based on a comparison result between the first location information and the second location information related to the base station apparatus, the second location information being registered in advance in the management server of the mobile communication network.

4. The base station apparatus according to claim 1, wherein a mobile terminal communicable with the base station apparatus is determined based on a comparison result between the first location information and the second location information related to the base station apparatus, the second location information being registered in advance in the management server of the mobile communication network.

5. The base station apparatus according to claim 1, wherein content of a process performed by the base station apparatus is determined based on a comparison result between the first location information and the plurality of pieces of second location information related to the base station apparatus, the pieces of second location information being registered in advance in the management server of the mobile communication network.

6. The base station apparatus according to any one of claims 1 to 5, wherein predetermined information on communication between the mobile terminal and the base station apparatus is received from the management server of the mobile communication network through a neighbouring base station of the base station apparatus, the predetermined information being transmitted to the base station apparatus from the management server of the mobile communication network.

7. The base station apparatus according to any one of claims 1 to 5, wherein predetermined information on communication between the mobile terminal and the base station apparatus is received from the management server of the mobile communication network through the fixed communication network and the terminating device, the predetermined information being transmitted to the base station apparatus from the management server of the mobile communication network.

8. A communication system comprising:
a fixed communication network;
a mobile communication network; and
a base station apparatus connected to the fixed communication network through a terminating device for a wire communication line, and communicable with a mobile terminal by radio communication, wherein
the communication system has notifying means for notifying a management server of the mobile communication network, of first location information as location information related to the base station apparatus, the first location information being registered in a management server of the fixed communication network in connection with the terminating device.

9. A communication method using a base station apparatus connected to a fixed communication network through a terminating device for a wire communication line, and communicable with a mobile terminal by radio communication, the method comprising:
a step (A) of acquiring first location information from the fixed communication network, the first location information being registered in a management server of the fixed communication network in connection with the terminating device; and
a step (B) of notifying a management server of a mobile communication network, of the first location information as location information related to the base station apparatus.

10. A program causing a computer mounted on a base station apparatus connected to a fixed communication network through a terminating device for a wire communication line and communicable with a mobile terminal by radio communication, to function as:
acquiring means for acquiring first location information from the fixed communication network, the first location information being registered in a management server of the fixed communication network in connection with the terminating device; and
notifying means for notifying a management server of a mobile communication network, of the first location information as location information related to the base station apparatus.
